# FASCICULE DE BREVET EUROPEEN

(11) **EP 1 533 227 B1**
(45) Date de publication et mention de la délivrance du brevet: **17.01.2007**
(21) Numéro de dépôt: 04292599.0
(22) Date de dépôt: 03.11.2004
(51) Int. Cl.: B64C 25/44, B60T 13/74

(54) **Procédé d'actionnement d'un frein d'aéronef d'au moins un actionneur électromécanique**
Verfahren zum Regeln einer Flugzeugbremse mit mindestens einem elektromechanischem Aktuator
Method for actuating an aircraft brake comprising at least one electromechanical actuator

(30) Priorité: 19.11.2003 FR 0313530
(43) Date de publication de la demande: 25.05.2005
(73) Titulaire: MESSIER-BUGATTI, 78140 Velizy Villacoublay (FR)
(72) Inventeur: Chico, Philippe, 92100 Boulogne-Billancourt (FR); Girod, Pierre, 75017 Paris (FR)
(74) Mandataire: Jaunez, Xavier

(56) Documents cités:
- WO-A-03/054412
- US-A1- 2002 104 718
- US-A1- 2003 029 680
- US-A1- 2003 042 802
- US-A1- 2003 062 228

## Description

L'invention concerne un procédé d'actionnement d'un frein d'aéronef équipé d'au moins un actionneur électromécanique.

### ARRIERE-PLAN DE L'INVENTION

Dans les architectures de freinage pour aéronefs équipés de freins hydrauliques, il est connu de commander les pistons par un asservissement en effort. Pour la mise en oeuvre de cet asservissement, l'effort exercé par les pistons se déduit très simplement de la mesure de la pression appliquée par le circuit hydraulique de l'aéronef sur les pistons.

Dans les architectures adaptées aux freins à actionneurs électromécaniques comportant chacun un poussoir déplaçable en regard de la pile de disques au moyen d'un moteur électrique pour exercer sur la pile de disques un effort en réponse à une consigne de freinage, l'asservissement en effort est bien plus difficile à mettre en oeuvre.

En effet, la mesure de l'effort est délicate car elle n'est bien sûr plus déductible de la mesure de la pression d'un fluide. Il faut alors mettre en oeuvre des capteurs d'efforts spécifiques, dont l'installation dans l'actionneur est complexe.

Pour remédier à ces inconvénients, il a été proposé d'asservir le poussoir en position. La position du poussoir peut être mesurée par un capteur de position spécifique ou peut être simplement déduite du nombre de tours du moteur d'actionnement nécessaire pour déplacer le poussoir par rapport à une position de référence de celui-ci. Des algorithmes prenant en compte le comportement mécanique et thermique du frein permettent de transformer la consigne d'effort en consigne de position.

Pour mettre en oeuvre ce type d'asservissement, il est nécessaire au préalable de repérer la position du poussoir par rapport à la pile de disques. A cet effet, il est connu, par exemple du document US 2003/0062228 A1, d'amener le poussoir au contact de la pile de disques, de mémoriser la position de contact, puis de reculer le poussoir, à partir de la position de contact ainsi déterminée, d'une distance correspondant à un jeu de fonctionnement. Le frein est ainsi initialisé et prêt à fonctionner, la position de contact étant mémorisée pour l'ensemble des séquences de freinage à venir.

On connaît également, notamment du document WO 03/054412 un procédé selon lequel la position de contact est déterminée lors de la phase de retrait du poussoir.

### OBJET DE L'INVENTION

L'invention a pour objet un procédé d'actionnement de frein pour aéronef équipé d'au moins un actionneur électromécanique offrant un temps de réponse diminué par rapport aux freins existants.

### BREVE DESCRIPTION DE L'INVENTION

L'invention a plus précisément pour objet un procédé d'actionnement d'un frein pour aéronef équipé d'au moins un actionneur électromécanique comportant un poussoir déplaçable de façon commandée en regard d'une pile de disques pour appliquer un effort sur la pile de disques en réponse à une consigne de freinage, comportant les étapes de :
- lorsque la consigne de freinage dépasse un seuil de contact prédéterminé, commander l'actionneur de sorte que le poussoir s'approche de la pile de disques, jusqu'à ce que le poussoir atteigne une position de contact avec la pile de disques ;
- mémoriser ladite position de contact ;
- puis, immédiatement après, commander l'actionneur pour que le poussoir applique sur la pile de disques un effort en réponse à la consigne de freinage.

Le freinage est ainsi initié immédiatement après l'acquisition de la position de contact, à la volée, sans mise en oeuvre d'une phase de retrait du poussoir visant à établir un jeu de fonctionnement entre le poussoir et la pile de disques. On gagne ainsi un temps précieux qui diminue le temps de réponse du frein.

La position de contact est ainsi actualisée à chaque freinage, et tient alors compte de l'usure de la pile de disques.

Selon un aspect particulier de l'invention, la phase d'approche se fait avec asservissement en vitesse, ce qui permet de contrôler la vitesse d'accostage du poussoir contre la pile de disques, diminuant ainsi le risque de détérioration des disques lors de l'accostage.

Selon encore un aspect particulier de l'invention, l'étape d'application de l'effort est mise en oeuvre par asservissement en position prenant pour référence ladite position de contact.

Cette position de contact est ainsi réactualisée à chaque phase d'approche.

De préférence, lorsque la consigne de freinage descend en dessous d'un seuil de retrait prédéterminé, l'actionneur est commandé de sorte que le poussoir s'éloigne de la pile de disques d'une distance prédéterminée comptée à partir de ladite position de contact.

La position de contact marquant la fin de la phase d'approche est ainsi réutilisée comme référence pour la phase de retrait du poussoir de la pile de disques. Ainsi, la position de retrait est actualisée à chaque freinage et tient alors compte de l'usure de la pile de disques.

De préférence, le seuil de retrait est inférieur au seuil de contact.

Ainsi, la phase de retrait n'est pas lancée lorsque la consigne repasse par le seuil de contact, mais un peu plus tard, ce qui permet, si la consigne venait à augmenter brusquement, d'appliquer rapidement un effort de freinage sans attendre le temps nécessaire à la mise en oeuvre de la phase de retrait suivie d'une nouvelle phase d'approche.

Avantageusement, lorsque la consigne de freinage descend en dessous du seuil de contact mais reste supérieure au seuil de retrait, le poussoir est astreint à rester sensiblement dans la position de contact.

Selon un aspect particulier de l'invention, lorsque le procédé de l'invention est appliqué à un frein dont les actionneurs sont équipés d'un organe de verrouillage du poussoir, le procédé comporte l'étape de, si l'actionneur est verrouillé, déverrouiller l'actionneur lorsque la consigne de freinage dépasse un seuil de verrouillage inférieur au seuil de contact.

Avantageusement, le seuil de verrouillage est inférieur au seuil de retrait.

Selon un autre aspect particulier de l'invention, la position de contact est déterminée par la détection du franchissement par un courant circulant dans l'actionneur d'un seuil d'intensité, la détection du franchissement du seuil d'intensité par ledit courant étant activée postérieurement au début du déplacement du poussoir vers la position de contact.

### BREVE DESCRIPTION DES DESSINS

L'invention sera mieux comprise à la lumière de la description qui suit en référence aux figures des dessins annexés parmi lesquelles :
- la figure 1 est un schéma d'une architecture de freinage d'un aéronef équipé de freins à actionneurs électromécaniques;
- la figure 2 est un ensemble de graphes montrant, en fonction du temps, les évolutions de la consigne de freinage, de l'effort exercé par le poussoir de l'actionneur sur la pile de disques ainsi que les évolutions de la position du poussoir.

### DESCRIPTION DETAILLEE DE L'INVENTION

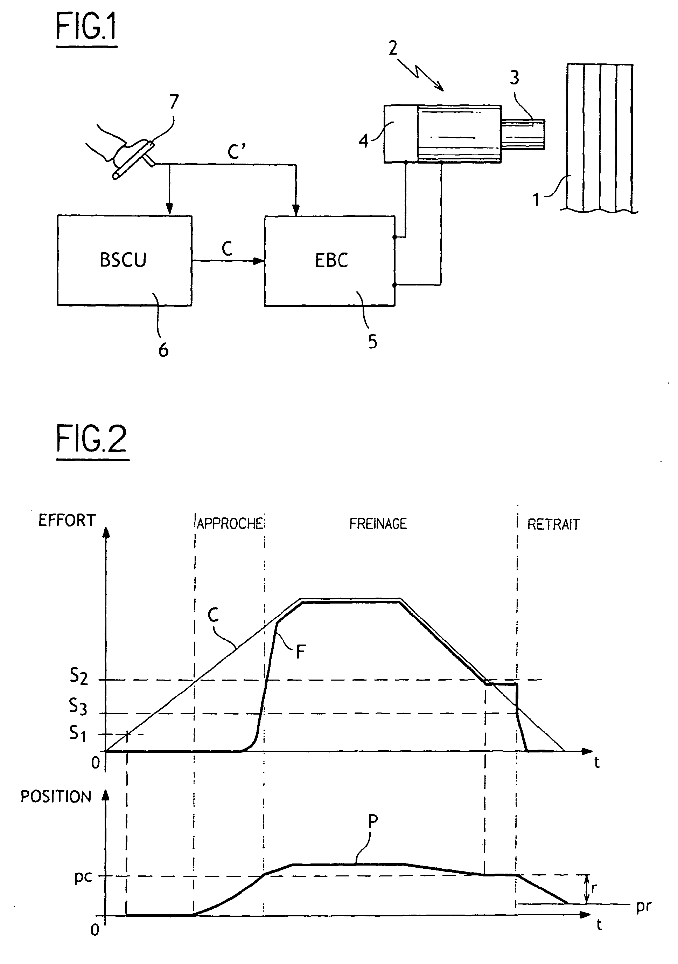

En référence à la figure 1, les freins électromécaniques pour aéronef comportent une pile de disques 1 en regard de laquelle est disposé au moins un actionneur électromécanique 2. L'actionneur 2 comporte un moteur électrique (non représenté) qui actionne un poussoir 3 déplaçable en regard de la pile de disques 1 pour imposer sur celle-ci un effort de freinage.

L'actionneur 2 comporte ici un organe de verrouillage 4 du poussoir 3.

L'actionneur 2 est associé à un boîtier de contrôle 5 (appelé EBC sur la figure), qui est adapté à commander l'organe de verrouillage 4 et à alimenter le moteur électrique de l'actionneur 2 en fonction d'une consigne de freinage c générée par un calculateur de freinage 6 (appelé BSCU sur la figure).

La consigne de freinage c est élaborée par le calculateur de freinage 6 en fonction de signaux provenant de pédales de frein 7 actionnées par le pilote de l'aéronef. Dans un mode de fonctionnement de secours lors duquel le calculateur de freinage BSCU 6 est défaillant, le signal de pédale 7 est envoyé directement au boîtier de contrôle EBC 5 et fait office de consigne de freinage c' alternative.

A la figure 2, la consigne de freinage c est illustrée en trait fin sur le graphe supérieur. La forme de la consigne a volontairement été simplifiée. En pratique, la consigne peut subir de brusques variations en raison de l'intervention d'un module d'anti-glissement qui est programmé pour baisser la consigne de freinage dès l'apparition d'un glissement de la roue freinée.

Sur le même graphe, on a représenté en trait fort les variations de l'effort F appliqué par le poussoir 3 sur la pile de disques 1. Sur le graphe inférieur, on a représenté les variations de la position p du poussoir 3.

Le procédé d'actionnement selon l'invention se déroule comme suit.

Dans un état initial, le poussoir 3 est au repos et est verrouillé dans une position en retrait par rapport à la pile de disques 1, correspondant à la position 0 sur le graphe inférieur.

En réponse à un actionnement des pédales de freins par le pilote, le calculateur de freinage BSCU élabore la consigne de freinage c, qui commence par augmenter progressivement.

Le boîtier de contrôle EBC 5 est programmé pour envoyer à l'organe de verrouillage 4 un ordre de déverrouillage en réponse au franchissement par la consigne de freinage c d'un seuil s1, appelé seuil de verrouillage. Le poussoir 3 est alors libéré et peut être immédiatement déplacé par suite de l'alimentation du moteur électrique de l'actionneur 2.

La consigne de freinage, continuant à augmenter, franchit un seuil s2, appelé seuil de contact. En réponse à ce franchissement, le boîtier de contrôle EBC 5 est programmé pour déplacer le poussoir 3 vers la pile de disques 1, en asservissant sa vitesse à une consigne de vitesse prédéterminée.

On voit sur le graphe inférieur que la phase d'approche du poussoir 3 commence à l'instant du franchissement par la consigne de freinage c du seuil de contact s2, et finit lorsque le poussoir 3 arrive en position de contact pc contre la pile de disques 1.

La définition de la position de contact pc est arbitraire. Ici, on retient comme position de contact pc la position pour laquelle le courant circulant dans le moteur électrique de l'actionneur 2 franchit un seuil d'intensité.

L'augmentation du courant dans le moteur électrique est due au fait que le poussoir 3 subit un effort résistant, en l'occurrence l'effort de réaction exercé par la pile de disques 1. A ce propos, il est à noter que le moteur électrique est contraint, au début de déplacement du poussoir, de générer un couple important pour accélérer les parties mobiles de l'actionneur initialement au repos. Ce couple nécessite un courant électrique qui peut dépasser le seuil d'intensité.

Pour éviter de détecter une position qui ne correspond pas à la position de contact désirée, la détection du franchissement du seuil d'intensité est activée postérieurement au début du déplacement du poussoir, le temps que le pic de courant initial s'estompe (en pratique, le décalage est de l'ordre de quelques centièmes de secondes). On s'assure ainsi que le franchissement par le courant du seuil d'intensité est bien dû au contact du poussoir 3 contre la pile de disques 1, et non à l'inertie des parties en mouvement.

Le poussoir 3 a ainsi été amené en contact avec la pile de disques 1 sous une vitesse contrôlée, évitant tout choc brutal risquant de détériorer les disques.

La détection du contact met ainsi fin à la phase d'approche.

Puis, on entre dans la phase de freinage proprement dite lors de laquelle le poussoir 3 est asservi de façon que l'effort F qu'il exerce sur la pile de disques 1 suive la consigne de freinage c. L'asservissement réalisé ici est un asservissement en position utilisant comme référence la position de contact pc.

Si la consigne de freinage descend sous le seuil de contact s2, mais reste supérieure à un troisième seuil s3 appelé seuil de retrait, le poussoir est alors astreint à rester dans la position de contact pc.

Ce n'est que lorsque la consigne de freinage c descend sous le seuil de retrait s3 que commence une phase de retrait lors de laquelle le poussoir 3 est déplacé vers une position de retrait pr éloignée de la position de contact pc d'une distance de retrait prédéterminée r.

La position de référence utilisée pour le retrait est donc la position de contact pc, détectée et mémorisée lors de la phase d'approche. La position de contact pc est donc réactualisée à chaque freinage, et tient ainsi compte de l'usure de la pile de disques.

La position de retrait pr évolue donc avec l'usure de la pile de disques, de façon à assurer une distance de retrait r constante. On voit sur le graphe inférieur, qu'en raison de l'usure de la pile de disques, la position de retrait pr ne correspond plus à la position initiale occupée par le poussoir 3 avant l'enclenchement de la phase d'approche

Le maintien d'une distance de retrait r constante permet de garantir que, pour une vitesse de consigne donnée, la phase d'approche a toujours sensiblement la même durée. Cette constance de durée assure une reproductibilité du temps de réponse de l'actionneur à un ordre de freinage.

Le seuil de retrait s3 est selon l'invention choisi inférieur au seuil de contact s2. En effet, il peut arriver que la consigne, en cours de freinage, tombe en dessous du seuil de contact s2, lors par exemple d'une activation du module d'anti-glissement en réponse à la détection d'un glissement de la roue freinée.

Si la phase de retrait était déclenchée au franchissement du seuil de contact s2, il faudrait alors, pour recommencer à freiner, attendre la fin de la phase de retrait, puis déclencher une nouvelle phase d'approche, ce qui prendrait beaucoup de temps.

Pour éviter cet inconvénient, la phase de retrait n'est déclenchée que pour un seuil de retrait s3 inférieur au seuil de contact s2. On ménage ainsi une plage dans laquelle la consigne de freinage peut descendre sous le seuil de contact s2 sans pour autant déclencher la phase de retrait, ce qui permet une réponse immédiate de l'actionneur à une consigne qui viendrait à augmenter subitement.

Avantageusement, le seuil de retrait s3 est choisi supérieur au seuil de verrouillage s1. Ainsi, on réserve une plage entre le moment où la phase de retrait est enclenchée et le moment où l'actionneur est verrouillé, ce qui permet, si la consigne de freinage devait subitement augmenter, de déclencher immédiatement la phase d'approche sans devoir attendre la fin de la séquence de verrouillage suivie d'une séquence de déverrouillage. Cette disposition permet donc également une réponse plus rapide de l'actionneur.

Quand la consigne franchit finalement le seuil de verrouillage s1, le poussoir 3 est de nouveau verrouillé.

L'invention n'est pas limitée aux modalités particulières de l'invention qui viennent d'être décrites, mais bien au contraire englobe toute variante entrant dans le cadre de l'invention tel que défini par les revendications.

En particulier, bien que l'on ait indiqué que l'application de l'effort lors de la phase de freinage se faisait par asservissement en position, on peut également assurer cette application d'effort au moyen d'un autre type d'asservissement, par exemple un asservissement en effort. Dans ce cas, lorsque la consigne de freinage se situe entre le seuil de contact et le seuil de retrait, le poussoir sera astreint à exercer un effort qui correspond à une valeur de consigne égale au seuil de contact.

## Revendications

1. Procédé d'actionnement d'un frein pour aéronef équipé d'au moins un actionneur électromécanique (2) comportant un poussoir (3) déplaçable de façon commandée en regard d'une pile de disques (1) pour appliquer un effort sur la pile de disques (1) en réponse à une consigne de freinage (c,c'), **caractérisé en ce qu'**il comporte les étapes de :
- lorsque la consigne de freinage franchit un seuil de contact (s2), commander l'actionneur de sorte que le poussoir (3) s'approche de la pile de disques (1), jusqu'à ce que le poussoir atteigne une position de contact (pc) avec la pile de disques (1);
- mémoriser ladite position de contact (pc),
- puis, immédiatement après, commander l'actionneur pour que le poussoir (3) applique sur la pile de disques un effort (F) en réponse à la consigne de freinage.

2. Procédé selon la revendication 1, **caractérisé en ce que** la phase d'approche se fait avec asservissement en vitesse.

3. Procédé selon la revendication 1, **caractérisé en ce que** l'étape d'application de l'effort est mise en oeuvre par asservissement en position prenant pour référence ladite position de contact (pc).

4. Procédé selon la revendication 1, **caractérisé en ce que**, lorsque la consigne de freinage descend en dessous d'un seuil de retrait (s3), l'actionneur est commandé de sorte que le poussoir (3) s'éloigne de la pile de disques (1) d'une distance (r) prédéterminée comptée à partir de ladite position de contact (pc).

5. Procédé selon la revendication 4, **caractérisé en ce que** le seuil de retrait (s3) est inférieur au seuil de contact (s2).

6. Procédé selon la revendication 5, **caractérisé en ce que**, lorsque la consigne de freinage descend en dessous du seuil de contact (s2) mais reste supérieure au seuil de retrait (s3), le poussoir est astreint à rester sensiblement dans la position de contact (pc).

7. Procédé selon la revendication 1, appliqué à un frein dont l'actionneur est équipé d'un organe de verrouillage du poussoir, **caractérisé en ce qu'**il comporte l'étape de, si l'actionneur (2) est verrouillé, déverrouiller l'actionneur lorsque la consigne de freinage dépasse un seuil de verrouillage (s1) inférieur au seuil de contact (s2).

8. Procédé selon la revendication 7, **caractérisé en ce que** le seuil de verrouillage (s1) est inférieur au seuil de retrait (s3).

9. Procédé selon la revendication 1, **caractérisé en ce que** la position de contact (pc) est déterminée par le franchissement par un courant circulant dans l'actionneur d'un seuil d'intensité, la détection du franchissement du seuil d'intensité par ledit courant étant activée postérieurement au début du déplacement du poussoir vers la position de contact (pc).

## Claims

1. A method of actuating an airplane brake fitted with at least one electromechanical actuator (2) including a pusher (3) that can be displaced in controlled manner in register with a stack of disks (1) to apply a force on the stack of disks (1) in response to a braking reference signal (C, C'), the method comprising the steps of:
· when the braking reference signal crosses a contact threshold (S₂), controlling the actuator so that the pusher (3) approaches the stack of disks (1), until the pusher reaches a contact position (pc) with the stack of disks (1);
· storing said contact position (pc); and then
· immediately afterwards, controlling the actuator so that the pusher (3) applies a force (F) on the stack of disks in response to the braking reference signal.

2. A method according to claim 1, **characterized in that** the approach stage is performed with under-speed servo-control.

3. A method according to claim 1, **characterized in that** the step of applying force is implemented by position servo-control using said contact position (pc) as its reference.

4. A method according to claim 1, **characterized in that**, when the braking reference signal drops below a withdrawal threshold (S₃), the actuator is controlled so that the pusher (3) moves away from the stack of disks (1) through a predetermined distance (r) measured from said contact position (pc).

5. A method according to claim 4, **characterized in that** the withdrawal threshold (S₃) is lower than the contact threshold (S₂).

6. A method according to claim 5, **characterized in that**, when the braking threshold drops below the contact threshold (S₂) but remains above the withdrawal threshold (S₃), the pusher is constrained to remain substantially in the contact position (pc).

7. A method according to claim 1, applied to a brake whose actuator is fitted with a pusher locking member, the method being **characterized in that** it includes the step, in the event of the actuator (2) being locked, of unlocking the actuator when the braking reference signal crosses a locking threshold (S₁) that is lower than the contact threshold (S₂).

8. A method according to claim 7, **characterized in that** the locking threshold (S₁) is lower than the withdrawal threshold (S₃).

9. A method according to claim 1, **characterized in that** the contact position (pc) is determined by current flowing in the actuator crossing a current threshold, detection of said current crossing the current threshold being activated after the beginning of the pusher being displaced towards the contact position (pc).

## Patentansprüche

1. Verfahren zum Betätigen einer Flugzeugbremse mit mindestens einem elektromechanischen Aktuator (2), umfassend einen Stößel (3), der gegenüber einem Scheibenstapel (1) auf gesteuerte Weise derart verschiebbar ist, dass er auf den Scheibenstapel (1) in Antwort auf einen Bremswert (c, c') eine Kraft ausübt, **dadurch gekennzeichnet, dass** das Verfahren die Schritte umfasst:
- wenn der Bremswert einen Kontaktschwellwert (s2) überschreitet, Steuern des Aktuators derart, dass sich der Stößel (3) dem Scheibenstapel (1) nähert, bis der Stößel eine Kontaktposition (pc) mit dem Scheibenstapel (1) erreicht;
- Speichern der besagten Kontaktposition (pc),
- unmittelbar danach, Steuern des Aktuators derart, dass der Stößel (3) in Antwort auf den Bremswert eine Kraft (F) auf den Scheibenstapel ausübt.

2. Verfahren nach Anspruch 1, **dadurch gekennzeichnet, dass** die Annäherungsphase mit Geschwindigkeitsreglung erfolgt.

3. Verfahren nach Anspruch 1, **dadurch gekennzeichnet, dass** der Schritt der Kraftanwendung mit Positionsregelung ausgeführt wird, wobei die besagte Kontaktstellung (pc) als Bezug dient.

4. Verfahren nach Anspruch 1, **dadurch gekennzeichnet, dass** wenn der Bremswert unter einen Rücksetzschwellwert (s3) fällt, der Aktuator derart gesteuert wird, dass sich der Stößel (3) ausgehend von der besagten Kontaktposition (pc) in einem vorbestimmten Abstand (r) vom Scheibenstapel (1) entfernt.

5. Verfahren nach Anspruch 4, **dadurch gekennzeichnet, dass** der Rücksetzschwellwert (s3) kleiner als der Kontaktschwellwert (s2) ist.

6. Verfahren nach Anspruch 5, **dadurch gekennzeichnet, dass** wenn der Bremswert unter den Kontaktschwellwert (s2) fällt, aber größer als der Rücksetzschwellwert (s3) ist, der Stößel im Wesentlichen in der Kontaktstellung (pc) gehalten wird.

7. Verfahren nach Anspruch 1, in Anwendung auf eine Bremse, deren Aktuator mit einem Verriegelungselement für den Stößel ausgestattet ist, **dadurch gekennzeichnet, dass** wenn der Aktuator (2) verriegelt ist, das Verfahren den Schritt des Entriegelns des Aktuators umfasst, wenn der Bremswert einen Verriegelungsschwellwert (s1) überschreitet, der kleiner als der Kontaktschwellwert (s2) ist.

8. Verfahren nach Anspruch 7, **dadurch gekennzeichnet, dass** der Verriegelungsschwellwert (s1) kleiner als der Rücksetzschwellwert (s3) ist.

9. Verfahren nach Anspruch 1, **dadurch gekennzeichnet, dass** die Kontaktstellung (pc) bestimmt wird, indem ein im Aktuator fließender Strom einen Stromstärkeschwellwert überschreitet, wobei das Erfassen der Überschreitung des Stromstärkeschwellwertes durch den besagten Strom nach Beginn der Verschiebung des Stößels in Richtung der Kontaktstellung (pc) aktiviert wird.
